# EUROPÄISCHE PATENTANMELDUNG

(11) **EP 0 530 396 A1**
(43) Veröffentlichungstag der Anmeldung: **10.03.1993**
(21) Anmeldenummer: 91114928.4
(22) Anmeldetag: 04.09.1991
(51) Int. Cl.: C02F 1/52

(54) **Verfahren zur Phosphatfällung mit Eisenhydroxid**

(71) Anmelder: INDUSTRIE AUTOMATION SONDERTECHNIK GmbH & CO KOMMANDITGESELLSCHAFT, D-69126 Heidelberg (DE)
(72) Erfinder: Müller, German Prof. Dr., W-6919 Bammental (DE); Riethmayer, Siegfried Dr., W- 7800 Freiburg (Breisqau) (DE)
(74) Vertreter: Abitz, Walter, Dr.-Ing.

(57) **Zusammenfassung**

Verfahren zur Ausfällung von Phosphaten aus phosphathaltigen Wässern unter Verwendung von Eisenhydroxid der allgemeinen Formel Fe₂O₃ · nH₂O, wobei n = 0,5 - 3,0 ist. Das zur Phosphatfällung verwendete Eisenhydroxid wird vorzugsweise aus eisenhaltigen natürlichen und technischen Schlämmen durch Auflösen mit Mineralsäure und Fällung mit Alkali gewonnen.

## Beschreibung

Die Erfindung betrifft ein Verfahren zur Fällung von Phosphaten aus phosphathaltigen Wässern.

Düngemittel, menschliche und tierische Exkremente, Haushaltsabfälle und Wasch- und Reinigungsmittel bewirken das Vorhandensein von gelöstem Phosphat in Oberflächengewässern.

Übermäßiges Pflanzenwachstum - insbesondere Algen - ist die Folge. Schon 1 g Phosphor bringt ein Wachstum von 100 g Biomasse, für deren Mineralisierung weitere 150 g Sauerstoff verbraucht werden. Sauerstoffmangel tritt ein mit der Folge, daß Fische ersticken und sich anaerobe Fäulnisprozesse entwickeln; die Gewässer "kippen um".

In kommunalen Abwässern befinden sich 5 - 10 mg Phosphor/Liter, meist als o-Phosphat in Form des leicht löslichen Natriumsalzes. Soweit die Phosphate aus Wasch- und Reinigungsmittel herstammen, finden sich noch Polyphosphate (z.B. Natrium-Tri-Poly-Phosphat), die jedoch bei der Klärung (meist jedoch schon im Abwasserkanal) zu o-Phosphaten hydrolisiert werden.

Nach der Rahmen-Abwasser-Verarbeitungsvorschrift vom 8. September 1989 (Bundesminister für Umwelt, Naturschutz und Reaktorsicherheit) darf in Abwässern aus Anlagen mit über 100 000 Einwohnergleicheinheiten ein Gehalt von max. 1 mg Phosphor/Liter im Ablauf enthalten sein.

Der angestrebte Wert liegt aber bei < 0,5 mg Phosphor/Liter.

Es ist bekannt, die gelösten Phosphate durch eine Fällungsreaktion mit gelösten Metallsalzen zu entfernen. Geeignet zur Eliminierung der gelösten Phosphate sind alle Metallkationen, die wasserunlösliche, bzw. schwerlösliche Phosphate bilden. Es sind dies in erster Linie Eisen, Aluminium und die Erdalkalimetalle. Vereinfacht formuliert laufen solche Fällreaktionen wie folgt ab: 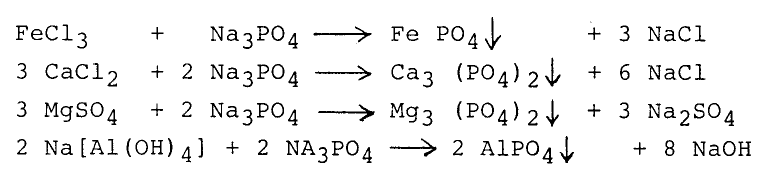
Die pH-Werte in kommunalen Kläranlagen rangieren zwischen 7,5 und 8,2. Die pH-Werte der benutzten Fällmittel spielen dabei so gut wie keine Rolle, weil die zugesetzten Mengen viel zu gering sind, um das pH der Gesamtmasse spürbar beeinträchtigen zu können. Zur Phosphatfällung können daher stark alkalische Produkte (z.B. Aluminate) wie auch stark saure Produkte (z.B. Mischhalogenide des Al³⁺, Fe³⁺, Ca²⁺ und Mg²⁺ aus der Chemie des Montmorrilonits mit pH < 1) gleichermaßen dienen.

Welche Produkte heute in der Praxis zur Fällung bevorzugt werden, hängt von einer ganzen Serie von Kriterien ab, wie z.B. Verfügbarkeit, Preis, anwendungstechnische Dienste des Anbieters und qualitative Abwägung der Fällmittel gegeneinander.

Eine der qualitativen Kriterien ist die Ergiebigkeit, d.h. die zu einer möglichst quantitativen Fällung theoretisch benötigte Menge. Diese hängt ab vom stöchiometrischen Verhältnis der Molekulargewichte des Phosphors und der Metalle der Fällmittel.

Zur Fällung von 1 Mol Phosphor (31 g) werden theoretisch benötigt:
27 g Aluminium
36,5 g Magnesium
56 g Eisen
oder 60 g Calcium.

Ein weiteres qualitatives Kriterium ist die Wasserlöslichkeit der ausgefällten Phosphate. Je geringer die Wasserlöslichkeit ist, um so weniger Fällmittel wird benötigt und um so geringer wird auch der Rest an gelöstem Phosphat. Unter den o-Phosphaten hat Aluminiumphosphat (AlPO₄) die geringste Wasserlöslichkeit, jedoch dicht gefolgt von Eisenphosphat. Unter den angezogenen Kationen bildet Magnesium das am stärksten wasserlösliche Phosphat.

Allgemein nimmt die Wasserlöslichkeit der Phosphate mit steigendem pH zu.

Diese Überlegungen zeigen aber nur einen Teil der komplexen Qualitätskriterien auf. In der Tat werden heute hauptsächlich Eisenchloride, Eisensulfate und Eisenchloridsulfate in Form wäßriger Lösungen benutzt, nicht zuletzt aus Preisgründen und der allgemeinen Verfügbarkeit (Titanchemie), sondern auch, weil das Eisen im Gegensatz zu Aluminium und den Erdalkalien Schwefelwasserstoff als unlösliches Eisensulfid bindet und schwefelfreies Faulgas gewährleistet. Der Nachteil bei der Verwendung von Eisensalzen zur Phosphatfällung liegt in der Sekundärbelastung der Gewässer durch lösliche Halogenide und Sulfate.

Allerdings haben auch die Aluminate heute einen beachtlichen Marktanteil. Diese haben jedoch wiederum den Nachteil, den Schwefelwasserstoff nicht zu binden.

Aufgabe der vorliegenden Erfindung ist es daher, diese Nachteile zu überwinden und den angestrebten Wert eines Restgehalts von < 0,5 mg Phosphor/Liter nach der Fällung zu erreichen.

Diese Aufgabe wird erfindungsgemäß dadurch gelöst, daß als Fällungsmittel Eisenhydroxid der allgemeinen Formel Fe₂O₃ · nH₂O benutzt wird, wobei n = 0,5 - 3,0 ist.

Es wurde nämlich überraschend und entgegen den Erwartungen gefunden, daß Eisenhydroxid als wäßrige Suspension zur Fällung von Phosphat hervorragend geeignet ist. Phosphor wird durch Eisenhydroxid nahezu quantitativ eliminiert, und es verbleiben nur minimale Restewerte von < 0,5 mg Phosphor/Liter.

Eisenhydroxid ist in zweiwertiger Form nicht beständig, und auch das dreiwertige Eisenhydroxid entspricht nicht der Formel Fe(OH)₃. Es liegt in verschiedenen Stufen als Eisenoxid-Hydrat der allgemeinen Formel Fe₂O₃ · nH₂O mit n = 0,5 bis 3 vor. (n = 1 entspricht FeO(OH); n = 3 entspricht Fe(OH)₃). Am häufigsten ist die Form mit n = 1, also FeO(OH), das in 3 verschiedenen Formen kristallisieren kann.

Der Einfachheit halber wird Eisenoxid-Hydrat jedoch stets als Eisenhydroxid bezeichnet.

Das erfindungsgemäß verwendete Eisenhydroxid kann durch Fällung aus Eisensalzlösungen oder eisensalzhaltigen Lösungen bei pH 3,5 - 4,5 gewonnen werden.

Die Verfügbarkeit ist universell. Eisenschrott als Ausgangsstoff steht in praktisch unbegrenzter Menge überall und nahezu kostenfrei zur Verfügung.

Das als Fällungsmittel verwendete Eisenhydroxid kann auch durch die aus der europäischen Patentschrift 0 072 885 B1 (erteilt am 30.04.86) und der europäischen Patentanmeldung 0 377 766 A1 (veröffentlicht am 18.07.90) bekannten Verfahren erhalten werden, wobei es durch Herauslösen von Metallen aus eisenhaltigen Ausgangsstoffen mittels Mineralsäuren, vorzugsweise Salzsäure, bei pH 0,5 - 2,5, Abtrennen der Feststoffe von den gelösten Metallsalzen, gegebenenfalls Behandlung der gelösten Metallsalze mit einem Oxidationsmittel und Wiederausfällung des Eisens als Hydroxid bei pH 3,5 - 4,5, vorzugsweise 4,0, gewonnen wird.

Unter Metallen sind dabei nicht nur Leicht- und Schwermetalle, sondern auch Halbmetalle zu verstehen.

Die Oxidation kann durch beliebige Oxidationsmittel erfolgen. Bevorzugte Oxidationsmittel sind Luft und Wasserstoffperoxid. Besonders bevorzugt erfolgt die Oxidation durch 5 bis 20 Minuten langes Einleiten von Luft oder durch Zugabe von 0,01 % Wasserstoffperoxid.

Die Wiederausfällung des Eisens erfolgt durch Alkalien, vorzugsweise durch Natronlauge oder Kalkmilch.

Eine weitere, praktisch kostenlose Rohstoffquelle für Eisenhydroxid sind schwermetallkontaminierte, aus Flüssen und Häfen ausgebaggerte Schlämme, Klärschlämme, Böden, Flugstäube, Filterstäube oder Rückstände aus Verbrennungen und Pyrolysen. Der überwiegende Anteil an Schwermetallen in solchen Produkten ist fast stets Eisen.

Nach einer Ausgestaltung der Erfindung kann das für die Fällung verwendete Eisenhydroxid noch andere Metallhydroxide enthalten. Hierbei handelt es sich vorzugsweise um Calcium-, Magnesium-, Aluminium- und/oder Siliciumhydroxid, wobei der Eisenanteil über 50% des Gesamtmetallgehalts ausmacht.

Diese Hydroxidgemische können beispielsweise nach den oben beschriebenen Fällungsverfahren eisensalzhaltiger Lösungen bei pH 3,5 - 4,5 mit Alkali gewonnen werden. Während die (giftigen) Schwermetalle bei diesen pH-Werten in Lösung bleiben, fallen - soweit vorhanden - ca. 2/3 der gelösten Aluminiumsalze, etwa die Hälfte des vorhandenen Siliciums, ca. 15% der gelösten Calciumsalze und ca. 5% der gelösten Magnesiumsalze zusammen mit dem Eisen als Hydroxide aus. Diese sind selbst ebenfalls Fällmittel für Phosphate, so daß ihre Anwesenheit nicht stört, sondern die Fällung begünstigt.

Die störende Mitfällung weiterer Metalle kann durch Oxidation der metallsalzhaltigen Lösungen und pH-Wertsteuerung reguliert werden. Wird beispielsweise in die Metallsalzlösung vor der Fällung 10 Minuten lang Luft zur Oxidation eingeleitet, so erfolgt die Fällung der Hauptmenge von eventuell vorhandenem Blei oder Chrom erst bei einem pH von 5.

Die Vorteile des erfindungsgemäßen Verfahrens gegenüber den üblichen Fällungen unter Verwendung von Eisen- oder Aluminiumsalzlösungen sind wie folgt:
- Es kann festes Eisenhydroxid in Form wäßriger Suspensionen im Gegensatz zu den bisherigen Eisensalzlösungen für die Fällung verwendet werden.
- Keine Sekundärbelastung der Gewässer durch Chloride oder Sulfate.
- Vollständige Ausfällung der Phosphate durch Doppelsalzbildung und Adsorption. Doppelsalze vom Typus Fe(OH)₃ · FePO₄ sind weniger wasserlöslich als FePO₄ allein. Auch im Vergleich zu analogen Verbindungen des Aluminiums sind die Doppelsalze des Eisens überlegen, weil Eisenhydroxid deutlich weniger wasserlöslich ist als Aluminiumhydroxid.
- Auch die Adsorption der Phosphate an der Oberfläche des Eisenhydroxids kann für die Geschwindigkeit und die Vollständigkeit der Fällung von erheblichem Einfluß sein. Eisenhydroxid hat eine Oberfläche von 600 g/m² mit großer Adsorptionskraft. Auch im Vergleich zu Aluminiumhydroxid mit einer Oberfläche von nur 125 g/m² ist Eisenhydroxid weit überlegen.
   Die Adsorptionskapazität und damit auch die Fällkapazität des Eisenhydroxids wird noch verstärkt durch die Anwesenheit von Silicium, das in Form polymerer Kieselsäuren und hydratisiertem Kieselsäureanhydrid ausfällt. Diese Stoffe haben ein außerordentlich hohes Adsorptionsvermögen.
- Die Adsorptionsfähigkeit des Eisenhydroxids erlaubt eine Senkung des CSB (chemischer Sauerstoffbedarf)-Wertes um 10-30 %.
- Eisenhydroxid beeinträchtigt nicht die biologische Nitrifizierung, die bei pH 7,5 - 8,0 optimal verläuft. Eisenhalogenide dagegen reagieren sauer und können die Nitrifizierung - zumindest lokal - stören.
- Wie Eisensalzlösungen binden auch Eisenhydroxidsuspensionen Schwefelwasserstoff als unlösliches Eisensulfid. Man erhält schwefelwasserstofffreies Faulgas.
- Wie Eisensalzlösungen können auch Eisenhydroxidsuspensionen zur Konditionierung von Klärschlamm in der Filterpresse dienen. Zusammen mit Kalkhydrat wird die Entwässerung verbessert.
- Der Zeitfaktor (die Alterung der Eisenhydroxidsuspensionen) beeinträchtigt die guten Fällergebnisse von Eisenhydroxid nur unwesentlich. Der Restgehalt an gelöstem Phosphat liegt auch nach 45 Tagen Alterung des ausgefällten Eisenhydroxids noch immer bei < 0,5 mg Phophor/Liter.

### BEISPIELE

### Beispiel 1

Chemisch reine Eisennitratlösung wurde mit Kalkhydrat auf pH 4,0 eingestellt. Eisen fällt zu über 99,5 % als Eisenhydroxid aus.

Der Gehalt an Eisen wurde auf 6,0 mg Fe/ml eingestellt.

Eine Trinatriumphosphat-Lösung wurde angesetzt und der Gehalt an Phosphor auf 10,0 mg Phosphor/Liter eingestellt.

Zu 100 ml dieser Phosphatlösung mit einem pH von 7,5 wurden bei 23°C 3 ml der Eisenhydroxidsuspension gegeben, 15 min lang gerührt und membranfiltriert (Porenweite 0,2 µm).

Die photometrische Bestimmung des Phosphorgehaltes im Filtrat ergab einen Rest-Phosphor-Gehalt von 0,11 mg/Liter. Die Phosphatfällung erfolgte innerhalb 24 Stunden nach Herstellung der Eisenhydroxid-Suspension.

### Beispiel 2

Wie im Beispiel 1 beschrieben, wurden Ansätze von Eisenhydroxid und Orthophosphatlösung hergestellt.

Die Zugabe der Eisenhydroxidsuspension zur Orthophosphatlösung erfolgte aber erst nach 45 Tagen.

Der Rest-Phosphor-Gehalt im Filtrat lag nun bei 0,36 mg/Liter.

### Beispiel 3

Baggerschlamm aus dem mittleren Neckar wurde bei pH 0,5 mit Salzsäure unter Rühren und Lufteinleitung bei Raumtemperatur eine Stunde lang behandelt. Danach wurde vom Schlamm abfiltriert und mit destilliertem Wasser nachgewaschen.

Der filtrierte Salzsäureextrakt wurde mit Natronlauge auf pH 4,0 gebracht und bei Raumtemperatur 15 min lang gerührt. Der ausgefallene Eisenhydroxidniederschlag enthielt:

| | |
|---|---|
| Fe | 1,86 mg/Liter |
| Al | 0,62 mg/Liter |
| Ca | 0,24 mg/Liter |
| Si | 0,18 mg/Liter |
| Mg | 0,06 mg/Liter |

Wie in Beispiel 1 beschrieben, wurden 100 ml der Orthophosphatlösung innerhalb 24 Stunden nach Herstellung der Eisenhydroxidsuspension mit 4 ml derselben versetzt und weiterverfahren.

Der Rest-Phosphor-Gehalt im Filtrat betrug 0,25 mg/Liter.

### Beispiel 4

Es wurde verfahren, wie im Beispiel III beschrieben. Die Zugabe der Eisenhydroxidsupension zur Orthophosphatlösung erfolgte jedoch erst nach einer Alterung der Suspension von 45 Tagen. Der Rest-Phosphor-Gehalt im Filtrat betrug 0,40 mg/Liter.

## Patentansprüche

1. Verfahren zur Ausfällung von Phosphaten aus kommunalen und industriellen Abwässern und anderen phosphathaltigen Wässern, dadurch gekennzeichnet, daß als Fällungsmittel Eisenhydroxid der allgemeinen Formel
Fe₂O₃ · nH₂O
benutzt wird, wobei n = 0,5 - 3,0 ist.

2. Verfahren nach Patentanspruch 1, dadurch gekennzeichnet, daß das als Fällungsmittel verwendete Eisenhydroxid durch Herauslösen von Metallen aus eisenhaltigen Ausgangsstoffen mittels Mineralsäuren, vorzugsweise Salzsäure, bei pH 0,5 - 2,5, Abtrennen der Feststoffe von den gelösten Metallsalzen, gegebenenfalls Behandlung der gelösten Metallsalze mit einem Oxidationsmittel, und Wiederausfällung des Eisens als Hydroxid bei pH 3,5 - 4,5, vorzugsweise 4,0, gewonnen wird.

3. Verfahren nach Patentanspruch 2, dadurch gekennzeichnet, daß als eisenhaltige Ausgangsstoffe vorzugsweise Fluß- und Hafen-Baggerschlämme, Böden, Klärschlämme, Flugstäube, Filterstäube und Rückstände aus Verbrennungen und Pyrolysen dienen.

4. Verfahren nach einem der Patentansprüche 1 bis 3, dadurch gekennzeichnet, daß das Fällungsmittel neben Eisenhydroxid noch andere Metallhydroxide enthält.

5. Verfahren nach Patentanspruch 4, dadurch gekennzeichnet, daß das Fällungsmittel neben Eisenhydroxid noch Calcium-, Magnesium-, Aluminium- und/oder Siliciumhydroxid enthält und der Eisenanteil über 50% des Gesamtmetallgehalts ausmacht.

## Geänderte Patentansprüche

### Geänderte Patentansprüche gemäss Regel 86(2) EPÜ.

1. Verfahren zur Ausfällung von Phosphaten aus kommunalen und industriellen Abwässern und anderen phosphathaltigen Wässern, dadurch gekennzeichnet, daß als Fällungsmittel Eisenhydroxid der allgemeinen Formel
Fe₂O₃ · nH₂O
benutzt wird, wobei n = 0,5 - 3,0 ist, das durch Herauslösen von Metallen aus eisenhaltigen Ausgangsstoffen mittels Mineralsäuren bei pH 0,5 - 2,5, Abtrennen der Feststoffe von den gelösten Metallsalzen, gegebenenfalls Behandlung der gelösten Metallsalze mit einem Oxidationsmittel, und Wiederausfällung des Eisens als Hydroxid bei pH 3,5 - 4,5 gewonnen wird.

2. Verfahren nach Patentanspruch 1, dadurch gekennzeichnet, daß als eisenhaltige Ausgangsstoffe vorzugsweise Fluß- und Hafen-Baggerschlämme, Böden, Klärschlämme, Flugstäube, Filterstäube und Rückstände aus Verbrennungen und Pyrolysen dienen.

3. Verfahren nach einem der Patentansprüche 1 oder 2, dadurch gekennzeichnet, daß das Fällungsmittel neben Eisenhydroxid noch andere Metallhydroxide enthält.

4. Verfahren nach Patenanspruch 3, dadurch gekennzeichnet,daß das andere Metallhydroxide Siliciumhydroxid ist.

5. Verfahren nach Patentanspruch 3, dadurch gekennzeichnet, daß das Fällungsmittel neben Eisenhydroxid noch Calcium, Magnesium-, Aluminium- und/oder Siliciumhydroxid enthält und der Eisenanteil über 50% des Gesamtmetallgehalts ausnacht.
